# EUROPEAN PATENT SPECIFICATION

(11) **EP 3 862 173 B1**
(45) Date of publication and mention of the grant of the patent: **05.11.2025**
(21) Application number: 21154081.0
(22) Date of filing: 28.01.2021
(51) Int. Cl.: B29C 70/56, B29C 70/38

(54) **AUTOMATED FIBER BUNDLE PLACEMENT APPARATUS**
VORRICHTUNG ZUM AUTOMATISCHEN ABLEGEN VON FASERBÜNDELN
APPAREIL DE PLACEMENT AUTOMATISÉ DE FAISCEAU DE FIBRES

(30) Priority: 05.02.2020 JP 2020018096
(43) Date of publication of application: 11.08.2021
(73) Proprietor: Tsudakoma Kogyo Kabushiki Kaisha, Kanazawa-shi, Ishikawa-ken 921-8650 (JP)
(72) Inventor: NISHIMURA, Isao, Ishikawa-ken, 921-8650 (JP); UENAKA, Ren, Ishikawa-ken, 921-8650 (JP); FUJINAGA, Takahisa, Ishikawa-ken, 921-8650 (JP)
(74) Representative: Zimmermann & Partner Patentanwälte mbB

(56) References cited:
- EP-A1- 3 572 216
- CN-A- 108 422 685
- JP-A- 2016 068 365
- US-A- 4 696 707
- US-A1- 2003 102 070
- US-A1- 2019 091 945
- US-A1- 2019 344 552

## Description

### BACKGROUND OF THE INVENTION

### FIELD OF THE INVENTION

According to the present invention, there is provided an automated fiber bundle placement apparatus including a supply device configured to set a plurality of bobbins around which fiber bundles are wound, and deliver the fiber bundles from each of the bobbins, a placement head that performs placement of each of the fiber bundles supplied from the supply device on a placement die, and includes a pressing section that presses the fiber bundle onto the placement die, and an articulated robot to which the placement head is attached and which moves the placement head for the placement.

### BACKGROUND ART

As an automated fiber bundle placement apparatus, an automated fiber placement (AFP) apparatus that places a narrow fiber bundle on a placement die is known. In the present application, the "fiber bundle" refers to a material such as a so-called tow prepreg formed in a tape shape by impregnating a bundle of a plurality of reinforcing fibers (carbon fibers, glass fibers, and the like) with a matrix resin. As the AFP apparatus, there is an apparatus configured to perform placement of the fiber bundle on the placement die by using an articulated robot.

As such an AFP apparatus, JP-A-2019-130914 discloses an apparatus including an unwinding mechanism configured to unwind (deliver) a fiber bundle from a bobbin around which the fiber bundle is wound, an attachment head that serves as a placement head for performing the placement and is attached to the articulated robot. In the AFP apparatus of JP-A-2019-130914, the placement head (attachment head) includes a pressing member, such as a roller or a shoe, which is a pressing section that presses the fiber bundle onto the placement die (attached surface), and a feeder which is a delivery mechanism that sends the fiber bundle toward the pressing member. In the AFP apparatus of JP-A-2019-130914, the delivery mechanism (feeder) is provided to be configured to include a pair of conveying belts driven by two sets of roller pairs, and to be in a state where the corresponding fiber bundle is nipped by the pair of conveying belts CN108422685A discloses an automated fiber bundle placement apparatus.

As an AFP apparatus, JP-A-2017-061140 discloses an apparatus configured such that a fiber supply unit which is a placement head performs the placement of a plurality of fiber bundles (fiber toes). Therefore, although not illustrated, the AFP apparatus of JP-A-2017-061140 includes a supply device in which a plurality of bobbins (spools) around which the fiber bundles are wound are set for supplying the fiber bundle toward the placement head (fiber supply unit). In the AFP apparatus of JP-A-2017-061140, the placement head is configured to include a pair of rollers which are delivery mechanisms that are provided for each path of the fiber bundles and nip the fiber bundles, and a compression roller which is a common pressing section in all of the fiber bundles. In the AFP apparatus, the pair of rollers are rotationally driven in the delivery mechanism, and accordingly, the fiber bundle nipped by the rollers is fed toward the pressing section (compression roller).

### SUMMARY OF THE INVENTION

Incidentally, in the AFP apparatus as described above, in order to ensure the proper placement, it is desired that the tension of the fiber bundle sent toward the pressing section in the placement head is a desired degree. In the AFP apparatus, the placement is performed by moving the placement head while pressing the fiber bundle to the placement die by the pressing section (while nipping the fiber bundle between the pressing section and the placement die), and thus, in the process of the placement, the fiber bundle is in a state of being pulled in the pressing section at a speed that corresponds to the movement speed of the placement head. Here, when the sending speed of the fiber bundle by the delivery mechanism is set to the speed that corresponds to the pulling speed (movement speed of the placement head), basically, it is considered that the tension of the fiber bundle between the delivery mechanism and the pressing section is maintained to the above-described desired tension. Even in the apparatus of the related art, the delivery mechanism is driven so as to have a sending speed that corresponds only to the movement speed of the placement head.

However, even though the delivery mechanism is rotationally driven, there is a case where the tension of the fiber bundle between the delivery mechanism and the pressing section differs from the desired degree. Various factors can be considered as the reason thereof, and for example, it is considered that variations occur in the tension of the fiber bundle in the path from the supply device to the placement head due to one of the factors.

Specifically, in the AFP apparatus, the supply device in which the bobbin is set is configured to deliver the fiber bundle while adjusting the tension similar to the unwinding mechanism disclosed in JP-A-2019-130914. However, in the path from the supply device to the placement head, the fiber bundle is guided by a plurality of guide members in a form of being bent at the position of the guide members. Therefore, even when the tension is adjusted on the supply device side, the tension does not necessarily spread uniformly over the entire fiber bundle to the placement head, and there is a case where the tension is partially in a different state. In this case, even when the delivery mechanism is driven in the same manner, the tension of the fiber bundle on the upstream side to the delivery mechanism varies, and thus, there is a case where the tension of the fiber bundle on the downstream side of the delivery mechanism is in a different state.

Similar to the AFP apparatus in JP-A-2017-061140, in a case of an apparatus configured such that the placement head performs (the plurality of fiber bundles are supplied to the placement head) the placement of the plurality of fiber bundles, the paths are different for each fiber bundle, and thus, there is a case where the above-described difference in tension occurs between the fiber bundles. Furthermore, in a case where the placement die to which the placement is performed has a complicated shape, in an AFP apparatus in which the placement head performs the placement of the plurality of fiber bundles as in JP-A-2017-061140, due to the difference in the position of the placement surface in the direction in which the pressing members are arranged in the pressing section, there is a case where the placement is performed in a state where the path length of the fiber bundle from the delivery mechanism to the pressing section differs between the fiber bundles. Even in such a case, a difference in tension occurs between the fiber bundles.

When the tension of the fiber bundle is different from the desired degree, there is a case where a problem occurs in the placement. For example, in a case where the tension of the fiber bundle is lower than the desired tension, there is a case where the placed fiber bundle is creased or the fiber bundle is clogged in the placement head, and the placement is not performed normally. In a case where the tension of the fiber bundle is higher than the desired tension, the tension of the fiber bundle affects the pressing by the pressing section, and as a result, the force for pressing the fiber bundle against the placement die is reduced, and as a result, there is a case where the placed fiber bundle is likely to be peeled off from the placement die.

Here, an object of the present invention is to provide an automated fiber bundle placement apparatus that can prevent problems in the placement by driving the delivery mechanism such that the tension of each fiber bundle is maintained at the desired degree between the delivery mechanism and the pressing section.

The present invention presupposes an automated fiber bundle placement apparatus including a supply device configured to set a plurality of bobbins around which fiber bundles are wound, and deliver the fiber bundles from each of the bobbins, a placement head that performs placement of each of the fiber bundles supplied from the supply device on a placement die, and includes a pressing section that presses the fiber bundle onto the placement die, and an articulated robot to which the placement head is attached and which moves the placement head for the placement.

In addition, in order to achieve the above-described purpose, the automated fiber bundle placement apparatus that is the presupposition of the present invention includes: a delivery mechanism that is provided on the placement head to send the fiber bundle toward the pressing section, and includes a plurality of sending mechanisms provided for each path of the fiber bundles and having a pair of rollers provided such that the fiber bundle is sent in a state of being nipped, and a drive mechanism having driving motors provided for each sending mechanism and rotationally driving at least one of the pair of rollers; a tension detecting mechanism provided to detect a tension of the fiber bundle on the pressing section side of each of the sending mechanisms in the delivery mechanism; a setting device in which a target tension is set as a set tension value; and a tension control device that controls the drive of each of the driving motors based on the set tension value set in the setting device and a detection tension value obtained from a detection value of the tension detecting mechanism.

In the automated fiber bundle placement apparatus of the present invention, the setting device is configured to set the set tension value for each fiber bundle.

Furthermore, the placement head may be configured such that a plurality of the paths are divided to a plurality of different positions in a back and forth direction of the placement head, and the setting device may be configured to set the set tension value at least for each position in the back and forth direction.

According to the automated fiber bundle placement apparatus of the invention, for each fiber bundle, each driving motor is controlled by the tension control device in the delivery mechanism based on the detection tension value obtained from the detection value of the tension detected on the pressing section side of each sending mechanism and the set tension value which is a preset target tension, and thus, the tension of each fiber bundle between the sending mechanism and the pressing section is maintained at the desired degree. Therefore, even between the fiber bundles, the tension of each fiber bundle is in a uniform state. Accordingly, it is possible to prevent the occurrence of the problem in placement caused by the tension of the fiber bundle being different from the desired degree.

In the automated fiber bundle placement apparatus according to the invention, by configuring the setting device such that the set tension value can be set for each fiber bundle, even in a case where the tension difference occurs between the fiber bundles due to the difference in the path of each fiber bundle, it is possible to make the tension of each fiber bundle uniform to a target degree.

Specifically, even when the set tension value is common to all of the fiber bundles, it is considered that the tensions of each fiber bundle are in a uniform state to the desired degree. However, in a configuration of the automated fiber bundle placement apparatus for placing the plurality of fiber bundles, there are many cases where the path of each fiber bundle from the supply device to the placement head is different between the fiber bundles. Due to the difference in the path (path length) of each fiber bundle as described above, there is a case where a difference in tension occurs between the fiber bundles between the supply device and the placement head. As a result, in a case where the set tension values are the same, there is a case where the actual tension of the fiber bundles sent from each sending mechanism in the delivery mechanism in the placement head to the pressing section is in a slightly different state between the fiber bundles. Here, by configuring the setting device such that a different set tension value can be set for each fiber bundle, it is possible to set a set tension value determined in consideration of the actual tension for each fiber bundle. Accordingly, the tension of each fiber bundle can be made uniform to a target degree.

In a case where the placement head is configured such that the paths of the plurality of fiber bundles are divided to each position with respect to a plurality of different positions in the back and forth direction, by configuring the setting device such that the set tension value can be set for each of the positions (back & forth positions), even in a case where the path length of the fiber bundle is different for each of the back & forth positions, the tensions of each fiber bundle can be made uniform to a target degree.

Specifically, in the automated fiber bundle placement apparatus that performs the placement of the plurality of fiber bundles, for the purpose of avoiding an increase in the size of the placement head, the plurality of fiber bundles are divided into two or more groups, and for each group, there is a case of configuring the placement head such that each fiber bundle passes through paths with different back & forth positions. In a case where the placement head is configured in this manner, the path length of the fiber bundle differs for each group, and thus, in a case where the set tension value is common, there is a case where the difference in the tension of the fiber bundle occurs between the groups. Here, in this case, by configuring the setting device such that the set tension value can be set for each of the back & forth positions, it is possible to respond to the difference in the path length in the same manner as described above, and the tension of each fiber bundle can be made uniform to the target degree.

### BRIEF DESCRIPTION OF THE DRAWINGS

FIG. 1 is a side elevation illustrating an automated fiber bundle placement apparatus to which the invention is applied.
FIG. 2 is an explanatory view illustrating a placement head of the automated fiber bundle placement apparatus.
FIG. 3 is an explanatory view of a tension control device according to the invention.
FIG. 4 is an explanatory view illustrating another example of a configuration of a delivery mechanism.

### DETAILED DESCRIPTION OF THE INVENTION

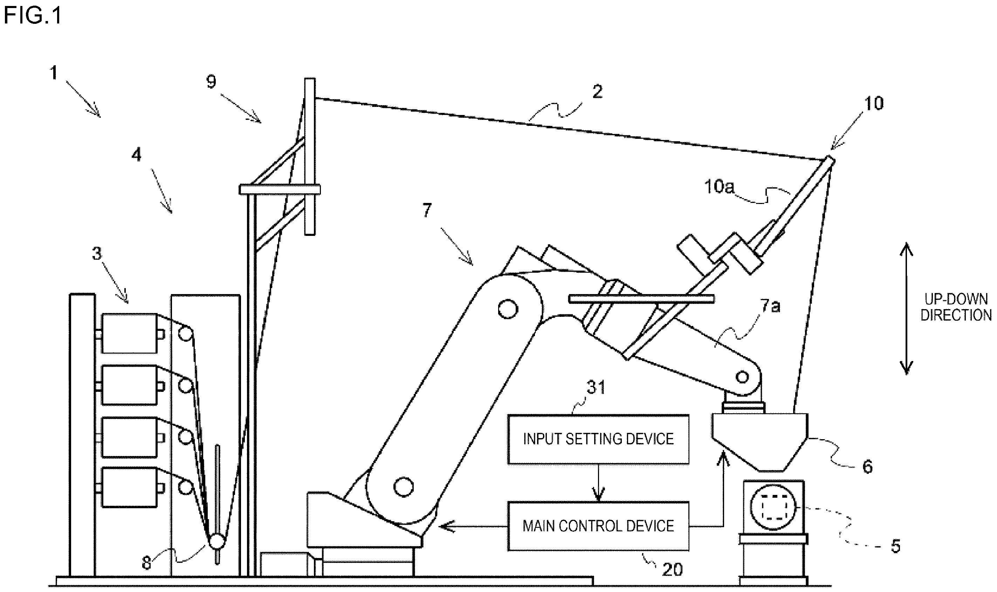

Hereinafter, an embodiment of an automated fiber bundle placement apparatus according to the invention will be described with reference to FIGS. 1 to 3.

As illustrated in FIG. 1, an automated fiber bundle placement apparatus 1 includes: a supply device 4 configured to set bobbins 3 around which fiber bundles 2 are wound; a placement head 6 for performing placement of the fiber bundles 2 supplied from the supply device 4 on a placement die 5; and an articulated robot 7 which moves the placement head 6 for the placement. In the embodiment, the automated fiber bundle placement apparatus 1 is configured such that the placement of sixteen fiber bundles 2 is performed at the same time. Therefore, although only four on the front side are illustrated in the drawing, but sixteen bobbins 3 are set in the supply device 4.

The supply device 4 includes a guide section 9 that guides the fiber bundle 2 pulled out from each bobbin 3 toward the articulated robot 7. The guide section 9 is configured to include a guide member (not illustrated) provided for each fiber bundle 2 for guiding each fiber bundle 2 individually, and to guide each fiber bundle 2 to a position higher than the articulated robot 7 by the guide member. In the supply device 4, a dancer roll 8 common to each fiber bundle 2 is provided as a configuration for adjusting the tension of each fiber bundle 2 in the path of the fiber bundle 2 between each bobbin 3 and the guide section 9. According to the configuration, each fiber bundle 2 is adjusted to an appropriate tension between the bobbin 3 and the guide section 9, and is pulled out to the articulated robot 7 side in an appropriate tension state.

As described above, a guide mechanism 10 for guiding each fiber bundle 2 guided by the guide section 9 is attached to the articulated robot 7. The guide mechanism 10 is attached to an arm 7a on the extremity side of the articulated robot 7. The guide mechanism 10 includes tow guides (not illustrated) provided for each fiber bundle 2 for guiding each fiber bundle 2 individually, and is configured such that each tow guide is supported by a support member 10a. The guide mechanism 10 is provided such that the support member 10a extends upward above the arm 7a and guides each fiber bundle 2 on the extremity side of the support member 10a.

Therefore, in the automated fiber bundle placement apparatus 1, after the fiber bundle 2 pulled out from each bobbin 3 is pulled out from the supply device 4 (guide section 9) at a position higher than that of the articulated robot 7 in the up-down direction, the guide mechanism 10 is reached by passing above the articulated robot 7. Each fiber bundle 2 is turned in a form of being guided by the guide mechanism 10, and is guided to the placement head 6 attached to the extremity of the arm 7a in the articulated robot 7.

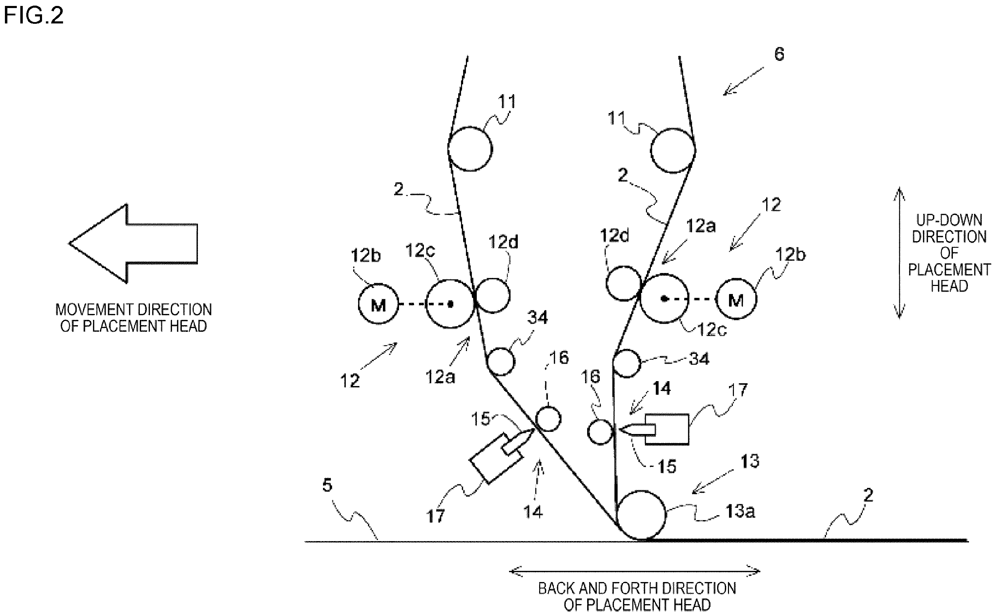

As illustrated in FIG. 2, the placement head 6 includes a pressing device 13 that presses the fiber bundle 2 onto the placement die 5, a delivery mechanism 12 that sends the fiber bundle 2 toward the pressing device 13, and a cutting device 14 that cuts the fiber bundle 2 between the pressing device 13 and the delivery mechanism 12. In addition to these components, the placement head 6 includes a guide roller 11 provided above the delivery mechanism 12 and guides the fiber bundle 2 toward the delivery mechanism 12.

For each of these components, the pressing device 13 includes a pressing section 13a that presses the fiber bundle 2 onto the placement die 5 and a pressing mechanism (not illustrated) that generates a pressing force toward the placement die 5 against the pressing section 13a. The pressing section 13a is a so-called compaction roller which is a member common to each fiber bundle 2 and is a roller-shaped member rotatably provided in the embodiment.

Regarding the guide roller 11, the guide roller 11 is provided in a form that the axial direction thereof matches the axial direction of the pressing section (compaction roller) 13a. In addition, in the embodiment, the sixteen fiber bundles 2 guided to the placement head 6 are supposed to be divided into two groups as described above, and two guide rollers 11 are provided at different positions in the back and forth direction (the direction that matches the direction in which the fiber bundle 2 is placed on the placement die 5 in accordance with the placement). As each fiber bundle 2 is divided and guided by any one of the guide rollers 11, in the placement head 6, the sixteen fiber bundles 2 are divided into two groups, are guided to the guide roller 11 at different positions in the back and forth direction for each group, and reaches the pressing section 13a.

Each group of the fiber bundles 2 is formed of eight fiber bundles 2 as a result of evenly dividing the sixteen fiber bundles 2. Therefore, the paths of the sixteen fiber bundles 2 are paths for each eight fiber bundles at two different positions in the back and forth direction. The path of each fiber bundle 2 in the placement head 6 passes through the guide roller 11 corresponding to the fiber bundle 2 and reaches the pressing section 13a common to each fiber bundle 2.

In addition, the delivery mechanism 12 includes a sending mechanism 12a provided for each path of the fiber bundle 2 and a driving motor 12b provided for each sending mechanism 12a and rotationally drive the sending mechanism 12a. In this embodiment, each sending mechanism 12a is configured of a pair of rollers 12c and 12d provided so as to nip the fiber bundle 2. In each of the sending mechanisms 12a, as one of the pair of rollers 12c and 12d (roller 12c in the illustrated example) is rotationally driven by the driving motor 12b, the other one is driven to rotate, and accordingly, the fiber bundle 2 is sent toward the pressing section 13a in the pressing device 13.

The cutting device 14 includes cutting blades 15 provided for each path of the fiber bundle 2, a securing member 16 provided to sandwich the path between the cutting blades 15, and cutting blade drive mechanisms 17 provided for each cutting blade 15 and causes the cutting blade 15 to perform a cutting operation for cutting the fiber bundle 2. The cutting blade 15 is provided such that the extending direction of the blade line (teeth) is parallel to the axial direction and substantially orthogonal to the traveling direction of the fiber bundle 2. In the embodiment, the securing member 16 is a so-called anvil roller which is a roller-shaped member provided to be rotatable, and is provided for each cutting blade 15. The cutting device 14 performs cutting of the fiber bundle 2 in cooperation with the cutting blade 15 and the securing member 16 by the cutting operation of the cutting blade 15 by the cutting blade drive mechanism 17.

As illustrated in FIG. 1, the automated fiber bundle placement apparatus 1 includes a main control device 20. The main control device 20 is provided in a form of being accommodated in a control box (not illustrated) provided in the automated fiber bundle placement apparatus 1. The automated fiber bundle placement apparatus 1 is configured such that the operation of each section of the articulated robot 7 for executing the placement and the placement head 6 attached to the articulated robot 7 is controlled by the main control device 20. Therefore, the operation of the delivery mechanism 12 (sending mechanism 12a) or the cutting device 14 which are provided in the placement head 6 is also controlled by the main control device 20.

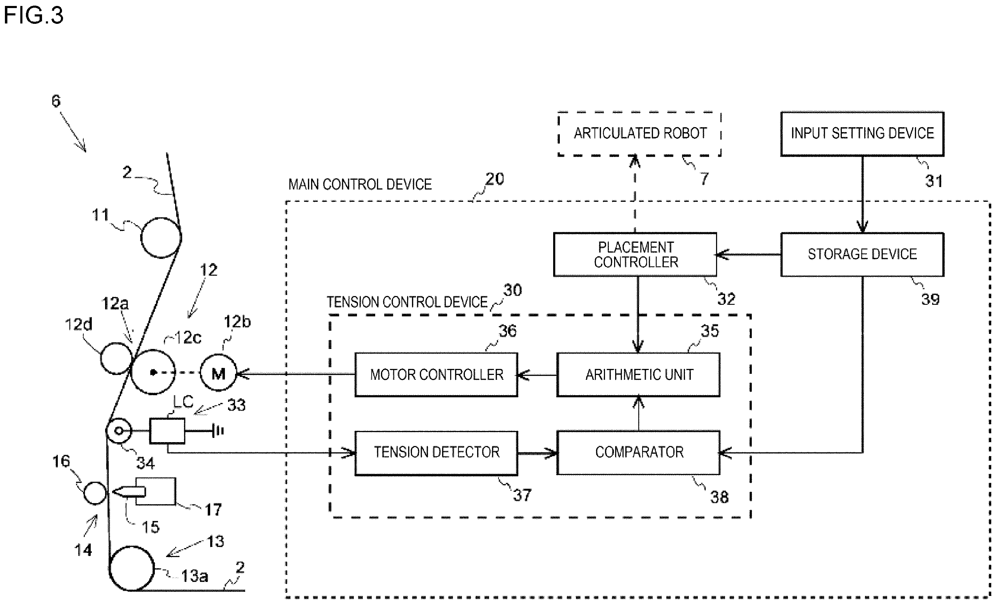

The control of the operation of each section is executed in accordance with a preset operation program. Here, as illustrated in FIG. 3, the main control device 20 includes a storage device 39 that stores the operation program thereof, and also includes a placement controller 32 that is connected to the storage device 39 and executes the control. The setting of the operation program is performed by, for example, an input setting device 31 connected to the storage device 39.

In the automated fiber bundle placement apparatus configured as described above, in the invention, in addition to the above-described delivery mechanism 12, the placement head includes a tension detecting mechanism provided to detect the tension of the fiber bundle 2 on the pressing section 13a side of each of the sending mechanisms 12a in the delivery mechanism 12, and a tension control device that controls the drive of each of the driving motors 12b of the delivery mechanism 12 based on the detection tension value obtained from the detection value of the tension detecting mechanism and the set tension value set in the setting device and as a target tension. In the embodiment, the tension control device is provided in the above-described main control device 20. One embodiment (the embodiment) of such an automated fiber bundle placement apparatus will be described in detail below with reference to FIG. 3. However, the embodiment described below is an example in which the setting device is configured to set the set tension value for each fiber bundle 2. In the embodiment, it is described that the storage device 39 also serves as the setting device.

A tension detecting mechanism 33 is provided for each path of the fiber bundle 2 in a form corresponding to each fiber bundle 2. Each of the tension detecting mechanisms 33 is configured to include a tension roller 34 provided on the sending mechanism 12a side of the cutting device 14 between the sending mechanism 12a and the pressing section 13a in the path thereof, and a load cell LC which is a load detector provided for each tension roller 34 and connected to the corresponding tension roller 34.

However, the tension roller 34 is placed at a position that bends the path of the fiber bundle 2 from the sending mechanism 12a to the pressing section 13a. Accordingly, in a state where the fiber bundle 2 is set, the corresponding fiber bundle 2 is in a state of being wound around the tension roller 34, and the load due to the tension of the fiber bundle 2 is applied to the tension roller 34. The load cell LC is configured to detect the load applied to the tension roller 34 and output a signal (detection signal) that corresponds to the detected load. Therefore, the automated fiber bundle placement apparatus 1 can individually detect the tension of each fiber bundle 2.

The tension control device 30 is provided in the main control device 20 as described above. However, the tension control devices 30 are provided in the same number as the sending mechanisms 12a in a form of corresponding to each sending mechanism 12a. In addition, each of the tension control devices 30 is connected to the placement controller 32 and the storage device 39 described above at the input end thereof. Each tension control device 30 is also connected to the load cell LC provided in the path of the fiber bundle 2 sent by the corresponding sending mechanism 12a. As the components, a tension detector 37, a comparator 38, an arithmetic unit 35, and a motor controller 36 are included. The details of each of these components are as follows.

The tension detector 37 is connected to the corresponding load cell LC at the input end thereof, and is connected to the comparator 38 at the output end thereof. The tension detector 37 is configured to obtain the tension of the fiber bundle 2 based on the detection signal output from the load cell LC at a preset cycle (for example, every 5 msec), and outputs a signal (tension signal) indicating the obtained tension to the comparator 38.

The comparator 38 is connected to the storage device 39 at the input end thereof in addition to the above-described tension detector 37. The comparator 38 is connected to the arithmetic unit 35 at the output end thereof. When the tension signal is output from the tension detector 37, the comparator 38 is configured to read the set tension value from the storage device 39, and at the same time, obtain the deviation by comparing the set tension value and the tension value (detection tension value) indicated by the tension signal.

As described above, in the embodiment, the storage device 39 is configured to set (store) the set tension value for each fiber bundle 2. As described above, in the embodiment, the placement head 6 is configured to divide the path of the fiber bundles 2 to two different positions in the back and forth direction. Therefore, in the configuration, the set tension value can be set for each position of the storage device 39 in the back and forth direction. Similar to the operation program, the set tension value is set by the input setting device 31 connected to the storage device 39. In addition, the comparator 38 is configured to read the set tension value set for the corresponding fiber bundle 2 from the storage device 39 as the set tension value for performing the comparison.

The comparator 38 is configured to output a deviation signal indicating the deviation to the arithmetic unit 35 as the deviation is obtained as described above. However, the deviation signal includes the magnitude of the deviation and the direction of the deviation (positive (plus) direction or negative (minus) direction, that is, positive in a case where the detection tension value is larger than the set tension value and negative in a case where the detection tension value is smaller than the set tension value). In a case where the deviation is 0, the comparator 38 is configured not to output the deviation signal to the arithmetic unit 35.

In addition to the above-described comparator 38, the arithmetic unit 35 is also connected to the placement controller 32 at the input end thereof. The arithmetic unit 35 is connected to the motor controller 36 at the output end thereof. The arithmetic unit 35 is configured to obtain the sending speed (basic sending speed) of the fiber bundle 2 by the sending mechanism 12a based on the movement speed of the placement head 6.

More specifically, the above-described operation program for controlling the operation of each section in the articulated robot 7 driven to move the placement head 6 includes the movement speed of the placement head 6 when executing the one-time placement (placement from the extremity of the fiber bundle 2 to the cut end). In the automated fiber bundle placement apparatus 1, since the placements at different placement positions and the like are continuously performed, the operation program includes an operation order in which each of the placements is executed in order. The placement controller 32 controls the operation of each section in the articulated robot 7 such that the placement head 6 moves at the movement speed in the placement at that time in each of the placements according to the operation program.

In addition, the placement controller 32 is configured to output a speed signal (head speed signal) that corresponds to the movement speed at that time to the arithmetic unit 35 for each of the placements. The arithmetic unit 35 is configured to obtain the basic sending speed based on the speed indicated by the head speed signal as the head speed signal is input.

When the deviation signal is output from the comparator 38, the arithmetic unit 35 is configured to correct the basic sending speed based on the magnitude of the deviation and the direction of the deviation included in the deviation signal.

More specifically, the arithmetic unit 35 is preset with an arithmetic formula for obtaining the correction speed used for correcting the basic sending speed based on the magnitude of the deviation included in the deviation signal. In addition, the arithmetic unit 35 is configured to obtain the correction speed by using the arithmetic formula as the deviation signal is input. The arithmetic unit 35 is configured to correct the basic sending speed by adding or subtracting the correction speed with respect to the basic sending speed in accordance with the direction of the deviation included in the deviation signal. Specifically, the arithmetic unit 35 is configured to add the correction speed to the basic sending speed in a case where the deviation direction is a positive direction, and subtract the correction speed from the basic sending speed in a case where the deviation direction is a negative direction.

The arithmetic unit 35 is configured to obtain the sending speed, which is the movement speed of the fiber bundle 2 delivered by the sending mechanism 12a, by correcting the basic sending speed with the correction speed as described above, and output a speed signal (sending speed signal) that corresponds to the obtained sending speed to the motor controller 36. Incidentally, in a case where the deviation is 0 (in a case where the deviation signal is not output from the comparator 38), "sending speed = basic sending speed" is satisfied.

The motor controller 36 is connected to the driving motor 12b in the corresponding sending mechanism 12a at the output end thereof. The motor controller 36 is configured to obtain the rotation speed of the driving motor 12b based on the sending speed signal when the sending speed signal is output from the arithmetic unit 35, and control the drive such that the driving motor 12b is driven at the rotation speed.

The act of the automated fiber bundle placement apparatus 1 in the embodiment provided with the tension control device 30 described above is as follows.

When executing the above-described placement one time, the placement controller 32 controls the operation of each section in the articulated robot 7 in accordance with the operation program. Accordingly, the placement head 6 moves to the start position of the placement, and the pressing section 13a of the placement head 6 is in a state of pressing the extremity of the fiber bundle 2 onto the placement die 5. The placement controller 32 outputs the head speed signal that corresponds to the movement speed of the placement head 6 when executing the placement set in the operation program to the arithmetic unit 35 in each of the tension control devices 30. In addition, the placement controller 32 starts controlling the operation of each section of the articulated robot 7 which is supposed to move the placement head 6 at the movement speed.

The arithmetic unit 35 in each of the tension control device 30 obtains the basic sending speed based on the speed indicated by the head speed signal when the head speed signal is input. At the start time of each of the placements, the arithmetic unit 35 sets "sending speed = basic sending speed", and outputs the sending speed signal that corresponds to the sending speed (basic sending speed) to the motor controller 36. When the sending speed signal is input, the motor controller 36 obtains the rotation speed of the driving motor 12b based on the speed indicated by the sending speed signal, and starts the drive of the driving motor 12b in the delivery mechanism 12 at the rotation speed. Accordingly, as the movement of the placement head 6 for the placement is started, the rotational drive of the roller 12c in the sending mechanism 12a is started, and the delivery of the fiber bundle 2 toward the pressing section 13a having a sending speed equal to the movement speed of the placement head 6 is started.

When the movement of the placement head 6 for the placement is started as described above, the tension detector 37 obtains the tension of the fiber bundle 2 based on the detection signal output from the load cell LC, and outputs the tension signal that corresponds to the tension to the comparator 38. When the tension signal is input, the comparator 38 compares the tension (detection tension value) indicated by the tension signal with the set tension value of the corresponding fiber bundle 2 read from the storage device 39, and obtains the deviation. In addition, in a case where the obtained deviation is other than 0, the comparator 38 outputs the deviation signal indicating the deviation to the arithmetic unit 35.

When the deviation signal is input, the arithmetic unit 35 corrects the basic sending speed and obtains the sending speed based on the magnitude of the deviation and the direction of the deviation included in the deviation signal, and outputs the sending speed signal that corresponds to the obtained sending speed to the motor controller 36. When the sending speed signal is input, the motor controller 36 changes the rotation speed of the driving motor 12b to a rotation speed that corresponds to the sending speed. Accordingly, the sending speed of the fiber bundle 2 is changed to the changed sending speed.

Here, in the arithmetic unit 35, in a case where the deviation direction is a positive direction as described above, that is, in a case where the tension of the fiber bundle 2 is higher than the tension set as the set tension value, the correction for adding the correction speed to the basic sending speed is performed. Accordingly, the fiber bundle 2 is sent toward the pressing section 13a at a speed higher than that before the correction, and as a result, the tension of the fiber bundle 2 is reduced. In a case where the deviation direction is a negative direction, that is, in a case where the tension of the fiber bundle 2 is lower than the tension set as the set tension value, the correction for subtracting the correction speed from the basic sending speed is performed. Accordingly, the fiber bundle 2 is sent toward the pressing section 13a at a speed lower than that before the correction, and as a result, the tension of the fiber bundle 2 increases.

Since the tension detector 37 obtains the tension of the fiber bundle 2 in a predetermined short cycle as described above, the comparison between the detection tension value and the set tension value in the comparator 38 is also performed in that cycle. Therefore, even when a deviation occurs between the detection tension value and the set tension value, the basic sending speed is corrected in the direction of eliminating the deviation in a short period of time, and thus, the tension of the fiber bundle 2 is maintained at the target degree.

In this manner, in the automated fiber bundle placement apparatus 1 based on the invention described above, the drive of the sending mechanism 12a provided for each fiber bundle 2 is controlled based on the preset set tension value, and thus, the placement of each fiber bundle 2 is performed in a state where the tension of each fiber bundle 2 is maintained at a desired degree.

Moreover, in the automated fiber bundle placement apparatus 1, the tension of each fiber bundle 2 is detected individually, the tension control device 30 provided corresponding to each of the sending mechanisms 12a (tension detecting mechanism 33) controls the drive of the corresponding sending mechanism 12a, and thus, the tensions of each fiber bundle 2 can be in a state of being uniform to the target degree more accurately.

Specifically, in order to control the drive of each sending mechanism 12a, for example, it is possible to comprehensively detect the tension by a tension roller common to each fiber bundle 2, and to consistently control the drive of each sending mechanism 12a by a common tension control device. However, in this case, there is a case where the tensions of each fiber bundle 2 are in a state of not being uniform to the target degree due to the difference or the like in the path length to the placement head 6 of each fiber bundle 2. On the other hand, by individually performing the tension detection of each fiber bundle 2 and the drive control of the sending mechanism 12a as described above, it is possible to make the tensions of each fiber bundle 2 be in a state of being individually maintained to the target degree, and thus, the tension of each fiber bundle 2 can be in a state of being uniform to the target degree more accurately.

Furthermore, in the automated fiber bundle placement apparatus 1 of the embodiment, the set tension value set for the storage device 39 is set for each fiber bundle 2. Accordingly, an appropriate set tension value can be set for each of the fiber bundles 2 in consideration of the difference in the path and the like. However, even in such a configuration, there is a case where the same set tension value is set for each fiber bundle 2 in a case where the placement is performed within an appropriate range.

The present invention is not limited to the above-described embodiments (the above-described embodiments), and can also be implemented in the following modified embodiments.
(1) Regarding the setting device in the invention, in the above-described embodiment, the storage device 39 for storing the operation program or the like for controlling the operation of the articulated robot 7 is also used as the setting device. However, the setting device in the invention is not limited to the one that is also used as such another storage device (setting device), and the one for an exclusive use in which only the setting values necessary for the tension control according to the invention such as the set tension value is set (stored) may be employed. The setting device in the invention is not limited to the one configured to set the set tension value for each fiber bundle 2 as in the above-described embodiment, and may be configured such that only one set tension value common to each fiber bundle is set.
   In the above-described embodiment, a configuration in which sixteen fiber bundles 2 are placed at the same time is employed, and in a case where the automated fiber bundle placement apparatus is configured to place such a large number of fiber bundles, it is preferable that the storage device 39 (setting device) is configured to be capable of setting the set tension value for each fiber bundle 2 as in the above-described embodiment. However, since the automated fiber bundle placement apparatus presupposed by the present invention is not limited to the one that places such a large number of fiber bundles, in a case where the automated fiber bundle placement apparatus is configured to place a small number of fiber bundles, it is possible to realize the appropriate placement even when the setting device is configured to set only one set tension value common to each fiber bundle as described above. Furthermore, regardless of the number of fiber bundles, even in a case where the automated fiber bundle placement apparatus is configured such that the tension difference is unlikely to occur between each of the fiber bundles in the relation to the path length, the setting device is configured to set only one set tension value common to each fiber bundle. Even in this case, it is possible to realize the appropriate placement.
(2) Regarding the path of the fiber bundle on the placement head, in the embodiment, the placement head 6 is configured to divide the path of the sixteen fiber bundles 2 to two different positions in the back and forth direction. In other words, in the placement head 6 of the above-described embodiment, when placing a large number of fiber bundles 2, in relation to the number or the like of the fiber bundles 2, the path of the fiber bundles 2 in the placement head 6 is configured to be divided into a plurality of paths in the back and forth direction. However, in the automated fiber bundle placement apparatus presupposed by the invention, the placement head is not limited to such a configuration, and may be configured to include the paths of all of the fiber bundles at the same one position in the back and forth direction.

In a case where the automated fiber bundle placement apparatus is configured to place a large number of fiber bundles as described above, the placement head is supposed to be prevented from becoming large in relation to the number of the fiber bundles, and it is preferable to configure the placement head such that the path is divided into a plurality of paths in the back and forth direction. However, as long as the size of the placement head is acceptable as a device in relation to the configuration or the like of the apparatus included in the placement head, even in a case where the number of fiber bundles to be placed is large as in the above-described embodiment, the placement head may be configured such that the path is at the same position in the back and forth direction.

In the automated fiber bundle placement apparatus presupposed by the invention, the number of fiber bundles to be placed is not particularly limited, and thus, depending on the number of the fiber bundles (in a case where the number is small), even when the path is set to the same position, the placement head is not made larger than that of the above-described embodiment. However, even in a case where the number of fiber bundles to be placed is small, the placement head may be configured to divide the path to a plurality of positions in the back and forth direction. In this manner, the configuration for the path in the placement head may be appropriate in consideration of the number of fiber bundles, the size of the placement head, and the like.

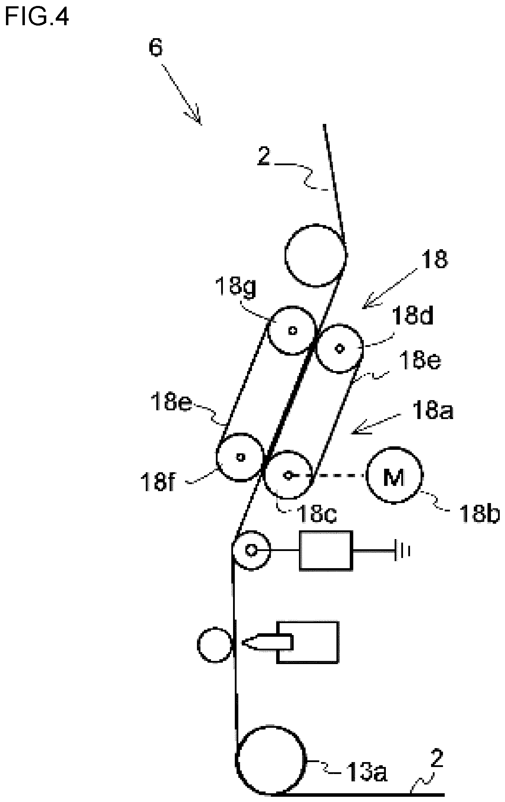

(3) Regarding each of the sending mechanisms in the delivery mechanism, in the above-described embodiment, each of the sending mechanisms 12a is configured such that the pair of rollers 12c and 12d deliver the fiber bundle 2 toward the pressing section 13a in a nipped state. However, each sending mechanism in the delivery mechanism of the automated fiber bundle placement apparatus presupposed by the invention is not limited to such a configuration, and for example, may be configured by combining a roller and a belt as illustrated in FIG. 4.

Regarding each sending mechanism 18a in the delivery mechanism 18 illustrated in FIG. 4, more specifically, each of the sending mechanisms 18a includes two sets of roller pairs of a roller pair on the driving side configured with a roller 18c rotationally driven by a driving motor 18b and a roller 18d provided corresponding to the roller 18c, and a roller pair on the driven side configured with a roller 18f driven to rotate with respect to the rotation of the roller 18c and a roller 18g provided corresponding to the roller 18f, and is configured such that an endless belt 18e is wound around each roller pair. Both roller pairs are placed such that the fiber bundle 2 can be nipped by the endless belt 18e wound around each roller pair. In each of the sending mechanisms 18a configured in this manner, when the roller 18c is rotationally driven by the driving motor 18b, the fiber bundle 2 nipped in both endless belts 18e is fed toward the pressing section 13a.

## Claims

1. An automated fiber bundle placement apparatus (1) including a supply device (4) configured to set a plurality of bobbins (3) around which fiber bundles (2) are wound, and deliver the fiber bundles (2) from each of the bobbins (3), a placement head (6) that performs placement of each of the fiber bundles (2) supplied from the supply device (4) on a placement die (5), and includes a pressing section (13a) that presses the fiber bundle (2) onto the placement die (5), and an articulated robot (7) to which the placement head (6) is attached and which moves the placement head (6) for the placement, the apparatus comprising:
a delivery mechanism (12) that is provided on the placement head (6) to send the fiber bundle (2) toward the pressing section (13a), and includes a plurality of sending mechanisms (12a, 18a) provided for each path of the fiber bundles (2) and having a pair of rollers (12c, 12d, 18c, 18d, 18f, 18g) provided such that the fiber bundle (2) is sent in a state of being nipped, and a drive mechanism having driving motors (12b, 18b) provided for each sending mechanism (12a, 18a) and rotationally driving at least one of the pair of rollers (12c, 12d, 18c, 18d, 18f, 18g);
a tension detecting mechanism (33) provided to detect a tension of the fiber bundle (2) on the pressing section (13a) side of each of the sending mechanisms (12a, 18a) in the delivery mechanism (12);
a setting device (31) in which a target tension is set as a set tension value for each fiber bundle (2); and
a tension control device (30) that controls the drive of each of the driving motors (12b, 18b) based on the set tension value set in the setting device (31) and a detection tension value obtained from a detection value of the tension detecting mechanism (33).

2. The automated fiber bundle placement apparatus (1) according to claim **1,** wherein
the placement head (6) is configured such that a plurality of the paths are divided to a plurality of different positions in a back and forth direction of the placement head (6), and
the setting device (31) is configured to set the set tension value at least for each position in the back and forth direction.

## Patentansprüche

1. Automatisierte Faserbündel-Platzierungseinrichtung (1) aufweisend eine Zuführvorrichtung (4), die so konfiguriert ist, dass sie eine Vielzahl von Spulen (3), um die Faserbündel (2) gewickelt sind, einstellt und die Faserbündel (2) von jeder der Spulen (3) abgibt, einen Platzierungskopfs (6), der die Platzierung jedes der von der Zuführvorrichtung (4) zugeführten Faserbündel (2) auf einer Platzierungsmatrize (5) durchführt und einen Pressabschnitt (13a) aufweist der das Faserbündel (2) auf die Platzierungsmatrize (5) drückt, und einen gelenkigen Roboter (7), an dem der Platzierungskopf (6) befestigt ist und der den Platzierungskopf (6) für die Platzierung bewegt, wobei die Einrichtung umfasst:
einen Abgabemechanismus (12), der am Platzierungskopf (6) bereitgestellt ist, um das Faserbündel (2) in Richtung des Pressabschnitts (13a) zu befördern und eine Vielzahl von Beförderungsmechanismen (12a, 18a) aufweist, die für jeden Pfad der Faserbündel (2) vorgesehen sind und ein Paar Rollen (12c, 12d, 18c, 18d, 18f, 18g) aufweisen, die so bereitgestellt sind, dass das Faserbündel (2) in einem gequetschten Zustand befördert wird, und einen Antriebsmechanismus, der Antriebsmotoren (12b, 18b), die für jeden Beförderungsmechanismus (12a, 18a) bereitgestellt sind, aufweist und mindestens eines des Paares Rollen (12c, 12d, 18c, 18d, 18f, 18g) drehend antreibt;
einen Spannungsdetektionsmechanismus (33), der bereitgestellt ist, um eine Spannung des Faserbündels (2) auf der Seite des Pressabschnitts (13a) jedes der Beförderungsmechanismen (12a, 18a) im Abgabemechanismus (12) zu detektieren;
eine Einstellvorrichtung (31), in der für jedes Faserbündel (2) eine Zielspannung als Spannungssollwert eingestellt wird; und
eine Spannungssteuervorrichtung (30), die den Antrieb jedes der Antriebsmotoren (12b, 18b) basierend auf dem in der Einstellvorrichtung (31) eingestellten Spannungssollwert und einem aus einem Erfassungswert des Spannungsdetektionsmechanismus (33) erhaltenen Erfassungsspannungswert steuert.

2. Automatisierte Faserbündel-Platzierungseinrichtung (1) nach Anspruch 1, wobei
der Platzierungskopf (6) so konfiguriert ist, dass eine Vielzahl der Pfade in einer Vor- und Rückwärtsrichtung des Platzierungskopfes (6) auf eine Vielzahl unterschiedlicher Positionen aufgeteilt ist, und
die Einstellvorrichtung (31) so konfiguriert ist, dass der Spannungssollwert mindestens für jede Position in der Vor- und Rückwärtsrichtung eingestellt ist.

## Revendications

1. Appareil de mise en place automatique de faisceaux de fibres (1) comprenant un dispositif d'alimentation (4) configuré pour placer une pluralité de bobines (3) autour desquelles les faisceaux de fibres (2) sont enroulés, et pour distribuer les faisceaux de fibres (2) à partir de chacune des bobines (3), une tête de mise en place (6) qui réalise la mise en place de chacun des faisceaux de fibres (2) alimentés à partir du dispositif d'alimentation (4) sur une matrice de mise en place (5) et comprend une section de pression (13a) qui comprime le faisceau de fibres (2) sur la matrice de mise en place (5) et un robot articulé (7) auquel la tête de mise en place (6) est fixée et qui déplace la tête de mise en place (6) pour la mise en place, l'appareil comprenant :
un mécanisme de distribution (12) qui est prévu sur la tête de mise en place (6) pour envoyer le faisceau de fibres (2) vers la section de pression (13a), et comprend une pluralité de mécanismes d'envoi (12a, 18a) prévus pour chaque chemin des faisceaux de fibres (2) et ayant une paire de rouleaux (12c, 12d, 18c, 18d, 18f, 18g) prévue de sorte que le faisceau de fibres (2) est envoyé dans un état dans lequel il est pincé, et un mécanisme d'entraînement ayant des moteurs d'entraînement (12b, 18b) prévus pour chaque mécanisme d'envoi (12a, 18a) et pour entraîner, en rotation, au moins l'un de la paire de rouleaux (12c, 12d, 18c, 18d, 18f, 18g) ;
un mécanisme de détection de tension (33) prévu pour détecter une tension du faisceau de fibres (2) du côté de la section de pression (13a) de chacun des mécanismes d'envoi (12a, 18a) dans le mécanisme de distribution (12) ;
un dispositif de réglage (31) dans lequel une tension cible est réglée comme étant une valeur de tension nominale pour chaque faisceau de fibres (2) ; et
un dispositif de contrôle de tension (30) qui contrôle l'entraînement de chacun des moteurs d'entraînement (12b, 18b) sur la base de la valeur de tension nominale déterminée dans le dispositif de réglage (31) et une valeur de tension de détection obtenue à partir d'une valeur de détection du mécanisme de détection de tension (33).

2. Appareil de mise en place automatique de faisceaux de fibres (1) selon la revendication 1, dans lequel :
la tête de mise en place (6) est configurée de sorte qu'une pluralité de chemins sont divisés en une pluralité de différentes positions dans une direction d'avant en arrière de la tête de mise en place (6), et
le dispositif de réglage (31) est configuré pour régler la valeur de tension nominale au moins pour chaque position dans la direction d'avant en arrière.
